# EUROPÄISCHE PATENTSCHRIFT

(11) **EP 1 587 356 B1**
(45) Veröffentlichungstag und Bekanntmachung des Hinweises auf die Patenterteilung: **07.07.2010**
(21) Anmeldenummer: 03815055.3
(22) Anmeldetag: 05.12.2003
(51) Int. Cl.: A01C 7/20

(54) **AUSBRINGSYSTEM UND SÄMASCHINE ZUM AUSBRINGEN VON SAATGUT**
APPLICATOR DEVICE AND SOWING MACHINE FOR THE APPLICATION OF SEED
SYSTEME DE DISTRIBUTION ET SEMOIR SERVANT A REPANDRE DES SEMENCES

(30) Priorität: 10.01.2003 US 339920
(43) Veröffentlichungstag der Anmeldung: 26.10.2005
(73) Patentinhaber: DEERE & COMPANY, Moline, Illinois 61265-8098 (US)
(72) Erfinder: STEPHENS, Lyle, Eugene, Hampton, IL 61256 (US); KEATON, Miles, Raymond, Rock Island, IL 61201 (US); ROMAN, Robert, John, Silvis, IL 61282 (US); VALDEZ, Jose, Miguel, Montpelier, IA 52759 (US)
(74) Vertreter: Holst, Sönke
(86) Internationale Anmeldenummer: PCT/EP2003/013754
(87) Internationale Veröffentlichungsnummer: WO 2004/062342

(56) Entgegenhaltungen:
- DE-C- 802 730
- US-A- 2 535 222
- US-A- 4 002 266
- US-A- 4 254 897
- US-A- 4 264 023
- US-A- 4 896 615
- US-A1- 2002 088 383

## Beschreibung

Die Erfindung betrifft eine Sämaschine zum Ausbringen von Saatgut, mit wenigstens einem Dosiersystem und wenigstens einem Ausbringsystem für Saatgut, wobei jedes Ausbringsystem mit einem entsprechenden Dosiersystem (28) in Verbindung steht und eine Saatgutführung und ein Förderrad mit einem Umfangsbereich aufweist, der mit mehreren aneinander angrenzenden getrennten Oberflächen versehen ist, wobei der Umfangsbereich nahe benachbart zu wenigstens einem Bereich der Saatgutführung angeordnet ist und das Förderrad als Bürstenrad und die getrennten Oberflächen als eine Mehrzahl von sich auf dem Umfangsbereich im Wesentlichen radial erstreckenden Borsten ausgebildet sind.

Landwirtschaftliche Sämaschinen, wie z. B. eine Reihensämaschine oder. eine Korndrillmaschine, bringen Saatgut in einer gewünschten Tiefe in mehrere in einem Ackerboden ausgebildete Saatfurchen aus. Im Falle einer Reihensämaschine werden mehrere Reihensäeinheiten normalerweise durch Bodenkontakt unter Verwendung von Rädern, Antriebswellen, Zahnrädern, Verteilergetrieben, Ketten oder dergleichen angetrieben. Jede Reihensäeinheit umfasst einen Rahmen, welcher beweglich mit einem Werkzeughalter verbunden ist. Der Rahmen kann einen Hauptbehälter für Saatgut, einen Behälter für Herbizide und einen Behälter für Insektizide tragen. Wenn granulare Herbizide und Insektizide eingesetzt werden, können die mit einem Ausbringen des Granulats in die Saatfurchen verbundenen Dosiermechanismen relativ einfach ausgebildet sein. Andererseits sind die zur genauen Dosierung des Saatguts erforderlichen Mechanismen, welche das Saatgut in vorgegebener Menge ausbringen und an relativ zur Saatfurche vorgegebenen Positionen platzieren, relativ kompliziert ausgebildet.

Die mit der Dosierung und Ausbringung des Saatguts verbundenen Mechanismen können im Wesentlichen in ein Dosiersystem für Saatgut und in ein Ausbringsystem für Saatgut unterteilt werden, welche miteinander in Verbindung stehen. Das Dosiersystem nimmt das Saatgut aus dem von dem Rahmen getragenen Saatgutbehälter in Form von Massengut auf. Es können verschiedene Arten von Dosiersystemen eingesetzt werden, wie z. B. Säplatten, Fingerplatten und Säscheiben. Im Falle eines Säscheiben-Dosiersystems ist eine Säscheibe mit mehreren auf dem Umfang der Säscheibe beabstandeten Saatgutzellen ausgebildet. Das Saatgut wird in die Saatgutzellen befördert, wobei je nach Größe und Ausbildung der Saatgutzellen ein oder mehrere Saatkörner in jede Saatgutzelle befördert werden. Ein Vakuum oder Druckluftstrom kann in Verbindung mit der Säscheibe eingesetzt werden, um das Befördern des Saatguts in die Saatgutzellen zu unterstützen. Die Saatkörner werden getrennt und in einer vorgegebenen Rate an das Ausbringsystem für Saatgut abgegeben.

Bei einem Dosiersystem, welches eine oben beschriebene Säscheibe aufweist, ist die Säscheibe normalerweise mit einer konzentrischen Antriebsachse versehen, welche an einem außenliegenden Ende ein über Bodenantrieb oder dergleichen angetriebenes Zahnrad aufweist. Die konzentrisch angeordnete Antriebsachse und das Zahnrad können die Kompaktheit des Dosiersystem begrenzen (z. B. Reduzierung der Gesamtgröße).

Das Ausbringsystem für Saatgut kann als ein schwerkraftgesteuertes und als ein antriebsunterstütztes Ausbringsystem eingestuft werden. Im Falle eines schwerkraftgesteuerten Ausbringsystems ist ein Saatgutleiter vorgesehen, der eine Einlassöffnung aufweist, welche unter dem Dosiersystem für Saatgut angeordnet ist. Die getrennten Saatkörner aus dem Dosiersystem fallen lediglich in den Saatgutleiter und mittels Schwerkraft aus einer Austrittsöffnung des Saatgutleiters direkt in die Saatfurche. Der Saatgutleiter kann in Rückwärtsrichtung gekrümmt sein, damit das Einleiten des Saatguts in die Saatfurche unterstützt wird. Die Rückwärtskrümmung hilft des Weiteren ein Hin- und Herspringen von Saatkörnern im Saatgutleiter zu reduzieren, wenn diese durch den Saatgutleiter in die Saatfurche fallen. Ferner hilft die Rückwärtskrümmung dabei, ein Aufspringen des Saatgutkorns zu reduzieren, wenn dieses auf den Boden der Saatfurche auftrifft.

Ein Ausbringsystem für Saatgut der antriebsunterstützten Art kann im Wesentlichen in ein förderbandgesteuertes, drehschiebergesteuertes, kettentriebgesteuertes oder druckluftgesteuertes Ausbringsystem klassifiziert werden. Diese Arten von Ausbringsystemen für Saatgut ermöglichen eine gleichmäßigere Ausbringung des Saatguts in gewünschten Abständen entlang eines vorgegebenen Pfades. Für detailliertere Beschreibungen derartiger Ausbringsysteme für Saatgut, sowie für landwirtschaftliche Saatausbringung generell, wird hiermit auf die Ausführungen in "PLANTING FUNDAMENTALS OF MACHINE OPERATION"; Breece, Edward H., PhD, et al.; Deere & Co.; 1981 verwiesen.

Die US 4,264,023 A offenbart ein Ausbringsystem für Saatgut, welches eine elastisch ausgebildete Förderrolle aufweist und dadurch in der Lage ist, Saatgut mit verschiedenen Korngrößen auszubringen.

Die US 2002/088383 A1 offenbart eine Dosiervorrichtung für Saatgut, welches ein von einem Förderrad gefördertes Förderband aufweist. Das Förderband weist mehrere über den Umfang angeordnete Kammern auf, in denen das Saatgut einzeln oder in größeren Mengen aufgenommen und ausgebracht werden kann.

Die US 4 896 615 A offenbart einen Saatgutbehälter zum Ausbringen von Saatgut. Der Saatgutbehälter weist ein Gehäuse und eine Ausbringöffnung auf. In dem Gehäuse ist eine Welle gelagert, an der mehrere sich drehende Bürstenräder angeordnet sind. Die Bürstenräder sind so angeordnet, dass sie über den Ausbringöffnungen liegen und das Saatgut aus dem Saatgutbehälter durch Rotation zu der Ausbringöffnung befördern. Nachteilig wirkt sich hierbei aus, dass dieses System nur eine sehr grobe Dosiervorrichtung aufweist, mit der nur eine grob dosierte Menge von Saatgut ausgebracht werden kann.

Weitere Ausbringsysteme werden beispielsweise in DE 802 730 C und US 2 535 222 A offenbart, bei denen ein Förderprinzip von über den Umfang eines Förderrads ausgebildeten Kammern zum Transport von Saatgut angewendet wird.

Die der Erfindung zu Grunde liegende Aufgabe wird darin gesehen, eine Sämaschine zu schaffen, welche ein gegenüber dem Stand der Technik genaueres, effizienteres und kompakteres System für das Ausbringen von Saatgut aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Sämaschine der eingangs genannten Art mit einem Förderrad versehen, welches bezüglich des Saatgutstroms stromabwärts des Dosiersystems angeordnet ist.

Die vorliegende Erfindung betrifft eine Sämaschine mit einem Dosiersystem und einem Ausbringsystem für Saatgut, wobei das Ausbringsystem eine Beschleunigungseinrichtung in Form eines Förderrads, welches mit einer Saatgutführung zusammenwirkt, aufweist. Das Förderrad weist eine äußere Greifschicht auf, mit mehreren zusammenliegenden getrennten Oberflächen, welche einen hohen Reibungskoeffizienten liefern, um ein sicheres Einbringen von Saatgut in einen Aufnahmespalt zu gewährleisten, ohne das Saatgut zu beschädigen. Ein Leitelement leitet das Saatgut in den zwischen Förderrad und Saatgutführung liegenden Aufnahmebereich und kann intermittierend die äußere Greifschicht des Förderrades ablenken, um zu gewährleisten, dass das Saatgut sicher von dem Rad aufgegriffen wird.

In einer bevorzugten Ausgestaltung der Erfindung weist die Sämaschine wenigstens ein Dosiersystem und ein Ausbringsystem für Saatgut auf. Jedes Ausbringsystem steht in Verbindung mit einem entsprechenden Dosiersystem. Jedes Ausbringsystem umfasst ein Gehäuse mit einer Saatgutführung und ein Förderrad, welches wenigstens teilweise in dem Gehäuse untergebracht ist. Das Förderrad weist einen Umfangsbereich mit mehreren aneinander angrenzenden getrennten Oberflächen auf. Der Umfangsbereich ist wenigstens zu einem Teil der Saatgutführung benachbart angeordnet, wobei das Saatgut mit einer vorgegebenen Rate von dem Umfangsbereich aufgenommen wird. Das Saatgut wird anhand des Umfangsbereichs des Förderrads über den nahe benachbarten Bereich der Saatgutführung gefördert. Das Saatgut wird von dem Umfangsbereich ausgebracht.

Ein Vorteil der Erfindung liegt darin, dass das Förderrad das Saatgut auf sichere Weise dosiert und beschleunigt.

Ein weiterer Vorteil liegt darin, dass Borsten am Umfangsbereich des Förderrads auf sichere Weise das Saatgut aufgreifen und über die Saatgutführung fördern, unabhängig von der Größe und Ausrichtung der Saatgutkörner.

Des Weiteren besteht ein Vorteil darin, dass die äußere Greifschicht am Umfangsbereich des Förderrads aus mehreren verschiedenen Materialien mit hohen Reibungskoeffizienten ausgebildet sein kann, wie z. B. Borsten, Schaumstoff, Leichtschaum, Gewebe, Fasern oder Splitt.

Ferner besteht ein Vorteil darin, dass das Gehäuse, welches teilweise das Förderrad umschließt, um das Saatgut über das Förderrad zu führen, einfach und wirksam mittels der Saatgutführung und einem Paar Seitenwände gestaltet ist.

Ein weiterer Vorteil besteht darin, dass das Leitelement die äußere Greifschicht des Förderrads intermittierend ablenken kann um ein sicheres Aufgreifen des Saatguts zu gewährleisten.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer erfindungsgemäßen Sämaschine mit einer Reihensäeinheit,
- Fig. 2: eine teilweise aufgebrochene Seitenansicht der Reihensäeinheit aus Figur 1, wobei innenliegende Komponenten eines Dosier- und Ausbringsystems für Saatgut dargestellt sind,
- Fig. 3: eine perspektivische Ansicht des Dosier- und Ausbringsystems aus Figur 2 mit einer abgelösten Seitenwand zur Darstellung eines Förderrades und einer Saatgutführung,
- Fig. 4: eine Seitenansicht des Ausbringsystems für Saatgut aus Figur 2 und Figur 3 und
- Fig. 5: eine Schnittansicht des Förderrades aus Figur 4 entlang der Linie 5-5.

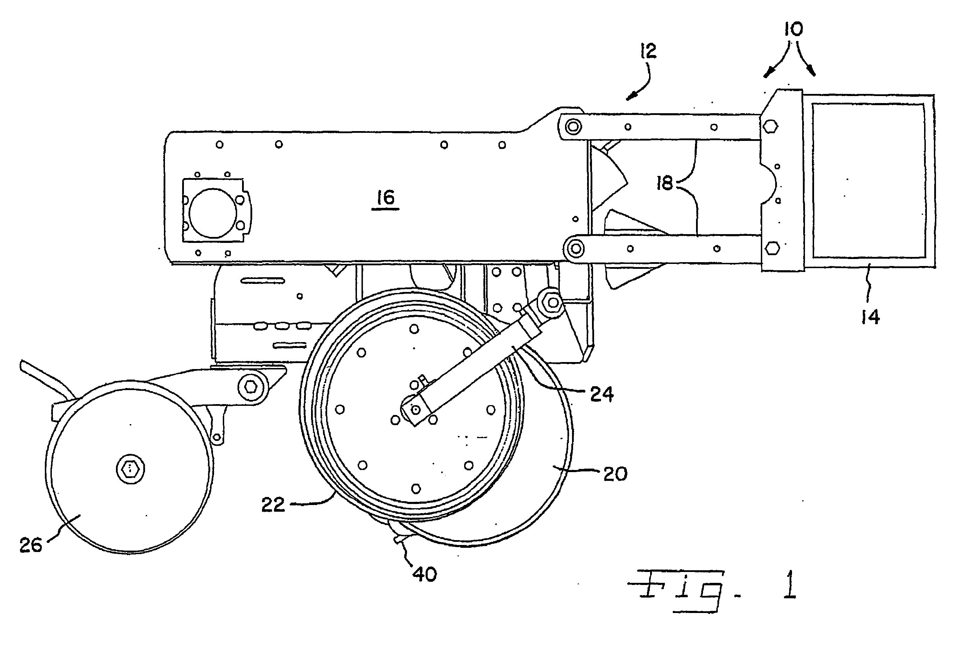

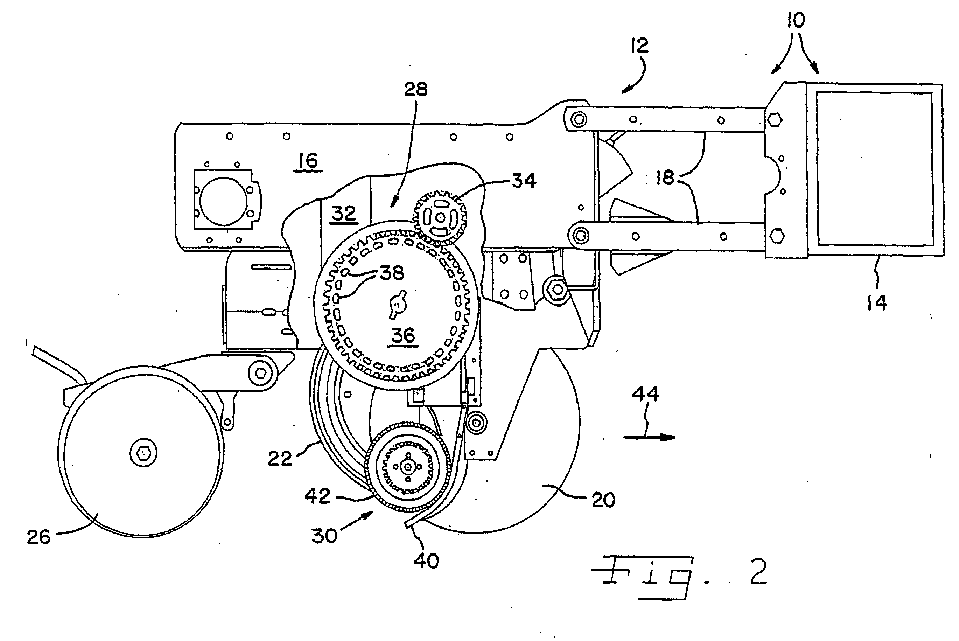

In den Figuren 1 und 2 ist eine erfindungsgemäße Sämaschine 10 dargestellt. Die Sämaschine 10 ist als Reihensämaschine ausgebildet, sie könnte aber auch als Korndrillmaschine etc. ausgebildet sein. Die Figuren 1 und 2 zeigen eine einzelne Reihensäeinheit 12 einer Reihensämaschine mit mehreren Reihensäeinheiten, wobei jede Reihensäeinheit 12 im Wesentlichen identisch ausgebildet und mit einem herkömmlichen Werkzeugträger 14 verbunden ist. Der Einfachheit halber ist nur eine einzelne Reihensäeinheit 12 dargestellt.

Die Reihensäeinheit 12 weist einen mehrteiligen Rahmen 16 auf, welcher durch ein Parallelgestänge 18 an den Werkzeugträger 14 befestigt ist. Der Werkzeugträger 14 ist mit einer Antriebseinheit (nicht gezeigt) verbunden, beispielsweise einem landwirtschaftlichen Traktor. Beispielsweise kann der Werkzeugträger 14 über eine Dreipunkt-Anhängevorrichtung an den landwirtschaftlichen Traktor gekoppelt sein. Der Werkzeugträger 14 kann mit Transporträdern, Markierungsarmen etc. von konventioneller Gestalt, welche der Einfachheit halber nicht dargestellt sind, gekoppelt sein. Die Transporträder sorgen auf bekannte Art und Weise für einen bodengetriebenen Antrieb der Reihensämaschine 12 unter Verwendung von Wellen, Ketten, Zahnrädern, Verteilergetrieben etc.

Der Rahmen 16 trägt einen doppelscheibigen Furchenöffner 20, zur Ausbildung einer Säfurche in einem Ackerboden. Dem Scheibenpaar des doppelscheibigen Furchenöffners 20 ist ein entsprechendes Einstell-/Schließradpaar 22 zugeordnet. Insbesondere ist jedes Einstell-/Schließrad 22 im Wesentlichen fluchtend und unmittelbar neben der Außenseite einer entsprechenden Scheibe des doppelscheibigen Furchenöffners 22 angeordnet. Die Einstell-/Schließräder 22 sind durch entsprechende Arme 24 schwenkbar mit dem Rahmen 16 verbunden. Jedes Einstell-/Schließrad 22 kann vertikal einstellbar angeordnet sein, um die Tiefe einer mit dem doppelscheibigen Furchenöffner 20 in den Ackerboden geschnittene Furche einzustellen.

Ein Paar Schließräder 26 wird ebenfalls von dem Rahmen 16 getragen. Die Schließräder 26 sind im Wesentlichen zum doppelscheibigen Furchenöffner 20 fluchtend angeordnet.

Wie in Figur 2 dargestellt ist, trägt jede Reihensäeinheit 12 der Sämaschine 10 ein Dosiersystem 28 und ein Ausbringsystem 30 für Saatgut. Das Dosiersystem 28 weist eine Einfüllrinne 32 auf, welche Saatgut aus einer Saatguthauptversorgung, wie z. B. einem über dem Rahmen 16 getragenen Saatgutbehälter aufnimmt. Alternativ kann das Saatgut auch in einem entfernt gelegenen Saatguthauptbehälter enthalten sein und über Druckluft oder dergleichen der Einlassrinne 32 zugeführt werden.

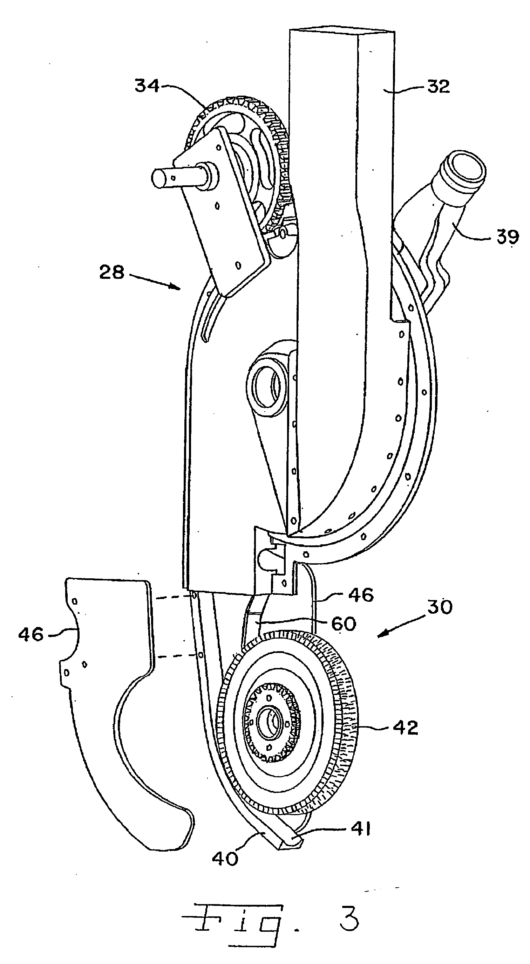

Das Dosiersystem 28 weist des Weiteren ein Antriebsrad 34 auf, welches eine Saatgutscheibe 36 antreibt, die mit mehreren und über dem Umfang intermittierend beabstandeten Saatgutzellen 38 versehen ist. Ein Verbindungsstück 39 (siehe Figur 3) ist fließend mit einer Vakuumeinrichtung (nicht gezeigt) verbunden, welche ein Unterdruck in den in der Saatgutscheibe 36 ausgebildeten Saatgutzellen 38 erzeugt. Dieser Unterdruck erzeugt ein Eindringen von Saatgut in die Saatgutzellen 38 und hält das Saatgut in den Saatgutzellen 38 an seinem Platz. Das Saatgut wird von den Saatgutzellen 38 zu dem Ausbringsystem 30 gebracht.

Das Ausbringsystem 30 weist eine Saatgutführung 40 auf, welches Saatgut in einer vorbestimmten Menge in die durch den doppelscheibigen Furchenöffner 20 ausgebildete Säfurche führt. Die Saatgutführung 40 weist in Querrichtung zur Säfurche eine Breite auf, die geringer als die Breite der Säfurche ist.

Ein Förderrad 42, welches ein Geschwindigkeitsregulator für Saatgut darstellt, weist einen Umfangsbereich auf, welcher am oder nahe benachbart zur Saatgutführung 40 positioniert ist. Das Förderrad 42 erfasst das von dem Ausbringsystem 30 in einer voreingestellten Rate aufgenommene Saatgut und beschleunigt das Saatgut auf eine Geschwindigkeit, die im Wesentlichen der Fahrgeschwindigkeit in Fahrtrichtung 44 der Sämaschine 10 entspricht. Das Förderrad 42 und die Saatgutführung 40 arbeiten zusammen, um das Saatgut mit einem gewünschten Bewegungsablauf und einer gewünschten Geschwindigkeit auszubringen.

Auf beiden Seiten des Förderrads 42 sind Seitenwände 46 positioniert, die an die Saatgutführung 40 befestigt sind. Die Seitenwände 46 und die Saatgutführung 40 definieren gemeinsam ein Gehäuse, welches teilweise das Förderrad 42 umgibt.

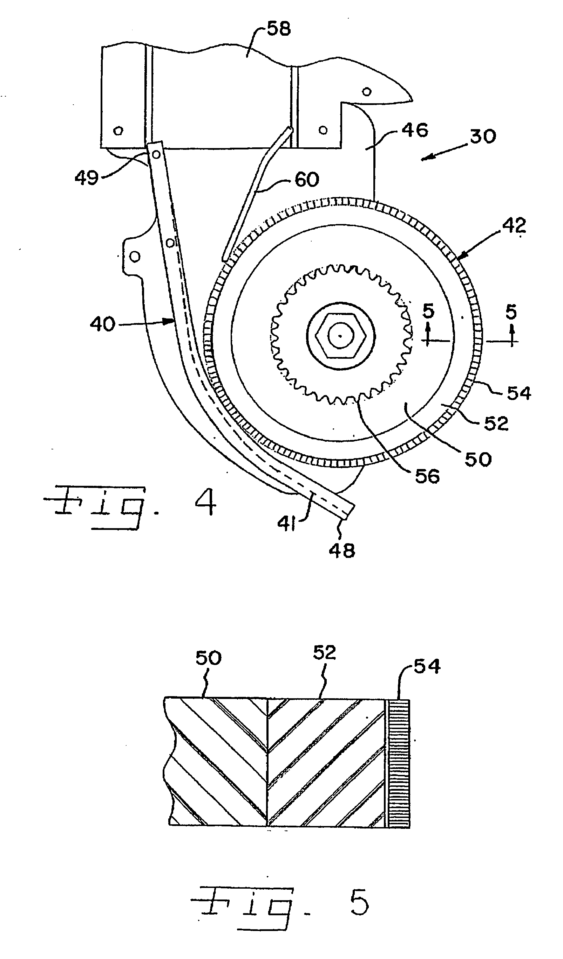

Mit Bezug auf die Figuren 4 und 5 wird das Ausbringsystem 30 im Folgenden detaillierter beschrieben. Das Förderrad 42 definiert eine Dosier- und eine Beschleunigungseinrichtung, welche gemeinsam mit der Saatgutführung 40, Saatgut in einer vorbestimmten Rate von dem unteren Ende 48 der Saatgutführung 40 ausbringen. Das Förderrad 42 weist im Wesentlichen eine Trägernabe 50, eine elastische mittlere Schicht 52 und eine äußere Greifschicht 54 auf. Ein Zahnrad 56 wird über eine Kette (nicht gezeigt) durch Bodenkontakt angetrieben, wobei gebräuchliche Bodenantriebselemente (nicht gezeigt) an der Sämaschine 10 verwendet werden. Alternativ kann das Zahnrad 56 auch durch einen Hydraulikmotor, Elektromotor etc. angetrieben werden. Das Zahnrad 56 wird mit einer Drehzahl angetrieben, mit der eine Tangentialgeschwindigkeit am äußeren Durchmesser des Förderrades 42 erzeugt wird, die im Wesentlichen der Vorwärtsgeschwindigkeit der Sämaschine 10 entspricht. Je nach Anwendung kann das Förderrad 42 selbstverständlich auch mit einer anderen Drehzahl angetrieben werden.

Die Trägernabe 50 ist aus einem geeigneten Kunststoffmaterial konstruiert und stellt ein tragendes Bauteil für das Förderrad 42 dar. Hierbei wird ein besonderes Kunststoffmaterial eingesetzt, welches ausreichende Steifigkeit bietet, so dass die Trägernabe 50 bei normalem Gebrauch nicht verformt wird. Je nach Anwendung kann die Trägernabe 50 auch aus einem anderen Material, wie z. B. Metall oder Verbundwerkstoff konstruiert sein. Die Trägernabe 50 ist im Wesentlichen scheibenförmig ausgebildet und stellt ein tragendes Bauteil für die elastische mittlere Schicht 52 und für die äußere Greifschicht 54 dar.

Die elastische mittlere Schicht 52 ist radial um die Trägernabe 50 angeordnet. Die elastische mittlere Schicht 52 weist einen im Wesentlichen rechteckigen Querschnitt auf, wie in Figur 5 gezeigt ist. Die Schicht 52 ist aus einem Material konstruiert, welches begrenzt ein radiales Verformungsvermögen nach innen aufweist, um sich verschiedenen Körnergrößen und Ausrichtungen von Saatgut anzupassen, wenn dieses zwischen Förderrad 42 und Saatgutführung 40 befördert wird. Im dargestellten Ausführungsbeispiel, ist die elastische mittlere Schicht 52 aus einem hochdichten Polyurethanschaum hergestellt, welcher in etwa eine Dichte von 240-320 kg/m³ (15-20 Pfund/Fuß³) aufweist. Diese Schaumdichte entspricht in etwa einer Shorehärte von 30-40 (Shore A). Je nach Anwendung kann ein Schaum mit einer Shorehärte von 20-70 eingesetzt werden. Des Weiteren kann die elastische mittlere Schicht 52 auch aus Gummi, Leichtschaum oder aus einer anderen Art elastischen Materials hergestellt sein.

Die äußere Greifschicht 54 ist radial um die elastische mittlere Schicht 52 angeordnet. Die Greifschicht 54 weist einen Umfangsbereich auf, der den äußeren Durchmesser des Förderrads 42 definiert. Der Umfangsbereich der äußeren Greifschicht 54 ist dicht benachbart zu einem Bereich der Saatgutführung 40 angeordnet. Vorzugsweise ist der Umfangsbereich der äußeren Greifschicht 54 in einem Abstand von 0-5 mm zu dem Bereich der Saatgutführung 40 angeordnet. In dem dargestellten Ausführungsbeispiel ist der Umfangsbereich der äußeren Greifschicht 54 in einem Abstand von etwa 1 mm zu der Saatgutführung 40 angeordnet.

Die äußere Greifschicht 54 ist mit einem Umfangsbereich ausgebildet, welcher eine Vielzahl von zusammenliegenden getrennten Oberflächen aufweist. Unabhängig von der im einzelnen verwendeten Art von zusammenliegenden getrennten Oberflächen, wie im Folgenden noch genauer beschrieben wird, wird ein hoher Reibungskoeffizient sichergestellt, mittels dem das Saatgut aufgegriffen und in einer vorgegebenen Rate durch einen Bereich zwischen Förderrad 42 und Saatgutführung 40 befördert wird, ohne das Saatgut wesentlich zu beschädigen. In dem in den Figuren 4 und 5 dargestellten Ausführungsbeispiel sind die vielen zusammenliegenden getrennten Oberflächen in Form von Borstenmaterial aus Nylon ausgebildet, hergestellt von der Firma 3M. Die Borsten weisen in etwa einen Durchmesser von 0,0762 mm (0,003 Zoll) und eine Länge von 3,175 mm (0,125 Zoll) auf. Je nach Anwendung kann das Material, der Durchmesser und die Länge der Borsten variieren. Beispielsweise können die Borsten eine Länge von bis zu ca. 25,4 mm (1 Zoll) und einen Durchmesser von bis zu ca. 0,6 mm (0,024 Zoll) aufweisen. Des Weiteren können auch andere Materialien eingesetzt werden, die einen hohen Reibkoeffizienten aufweisen, wie z. B. ein Schaumstoffbelag, Leichtschaumbelag, Gewebebelag, Faserbelag oder ein Splittbelag.

Die Saatgutführung 40 ist mit einer Führungsrinne 41 versehen, welche in ihrer Tiefe vom oberen Ende 49 zum unteren Ende 48 zunimmt. Die Führungsrinne 41 hält das Saatgut zentriert auf der Saatgutführung 40, wenn es von dem Förderrad 42 befördert wird und verbessert des Weiteren den Bewegungsablauf mit dem das Saatgut am unteren Ende 48 in die im Ackerboden ausgebildete Säfurche ausgebracht wird.

Ein Leitelement 60 ist unterhalb einer Auslassrinne 58 angeordnet und erstreckt sich vom Boden des Dosiersystems 28 zum Ausbringsystem 30. Das Leitelement 60 leitet das Saatgut in den zwischen Förderad 42 und Saatgutführung 42 ausgebildeten Aufnahmespalt. Das Leitelement 60 kann ebenfalls derart ausgebildet sein, dass es mit den Borsten der äußeren Greifschicht 54 des Förderrads 42 in Kontakt tritt. Dieses örtliche Ablenken der Borsten trägt dazu bei, das Saatgut sicher in den Aufnahmespalt zwischen Förderrad 42 und Saatgutführung 40 zu bringen. In dem gezeigten Ausführungsbeispiel ist das Leitelement 60 in Form einer Platte ausgebildet, die eine Breite entsprechend der Breite des Förderrads 42 aufweist. Das Leitelement 60 kann jedoch auch anders ausgebildet sein.

Während des Betriebs wird ein ausgewähltes Saatgut aus einer Hauptversorgungsstelle für Saatgut von der Einlassrinne 32 des Dosiersystems 28 aufgenommen. Das Saatgut wird gegen eine Seite der Saatgutscheibe 36 gehalten, wobei die Saatgutscheibe 36 durch das Antriebsrad 34 mit einer vorgegebenen Drehzahl unter Verwendung von einem mechanischen Antrieb, hydraulischen Motor, Elektromotor oder einem anderen geeigneten Antrieb angetrieben wird. Das Saatgut wird in Saatgutzellen 38 in der Saatgutscheibe 36 aufgenommen. Um das Befördern des Saatguts in die Saatgutzellen 38 zu unterstützen wird die gegenüberliegende Seite der Saatgutscheibe 36 unter Verwendung von einer geeigneten Vakuumquelle mit einem Unterdruck beaufschlagt. Selbstverständlich kann auch ein Überdruck auf der Seite der Saatgutscheibe angewendet werden, auf der das Saatgut eingebracht wird. Das Saatgut wird von dem Dosiersystem 28 mit einer vorgegebenen Rate durch die Auslassrinne 58 abgegeben. Das Leitelement 60 unterstützt das Einführen des Saatguts in den Aufnahmespalt, welcher zwischen Förderrad 42 und Saatgutführung 40 ausgebildet ist. Das Leitelement 60 kann ebenfalls örtlich die Borsten der äußeren Greifschicht 54 ablenken, wenn diese daran entlang rotieren. Die Ablenkung der Borsten unterstützt das Aufgreifen des Saatguts und das Befördern des Saatguts in den zur Saatgutführung 40 benachbarten Aufnahmespalt. Ein Zwischenraum von näherungsweise 1 mm zwischen dem Umfangsbereich des Förderrads 42 und der Saatgutführung 40 stellt sicher, dass das Saatgut von der äußeren Greifschicht 54 aufgegriffen wird, ohne dabei zu viel Kraft auf das Saatgut auszuüben. Die elastische mittlere Schicht 52 kann auch, je nach Größe und/oder Ausrichtung der Saatgutkörner, von dem Saatgut eingedrückt werden, wenn dieses in den Bereich zwischen Förderrad 42 und Saatgutführung 40 eintritt. Die Führungsrinne 41 nimmt in ihrer Tiefe kontinuierlich zu und hält das Saatgut entlang der Längsachse der Saatgutführung 40. Das Saatgut wird beschleunigt, um in etwa die Vorwärtsfahrgeschwindigkeit der Sämaschine 10 zu erreichen und wird von der Führungsrinne 41 am unteren Ende 48 in die in dem Ackerboden ausgebildete Säfurche abgelegt. Einstell-/Schließräder 22 und Schließräder 26 schließen die Säfurche und bedecken dadurch das in der Säfurche befindliche Saatgut.

## Patentansprüche

1. Sämaschine zum Ausbringen von Saatgut, mit wenigstens einem Dosiersystem (28) und wenigstens einem Ausbringsystem (30) für Saatgut, wobei jedes Ausbringsystem (30) mit einem entsprechenden Dosiersystem (28) in Verbindung steht und eine Saatgutführung (40) und ein Förderrad (42) mit einem Umfangsbereich aufweist, der mit mehreren aneinander angrenzenden getrennten Oberflächen versehen ist, wobei der Umfangsbereich nahe benachbart zu wenigstens einem Bereich der Saatgutführung (40) angeordnet ist und das Förderrad (42) als Bürstenrad und die getrennten Oberflächen als eine Mehrzahl von sich auf dem Umfangsbereich im Wesentlichen radial erstreckenden Borsten ausgebildet sind, **dadurch gekennzeichnet, dass** das Förderrad (42) bezüglich des Saatgutstroms stromabwärts des Dosiersystems (28) angeordnet ist.

2. Sämaschine nach Anspruch 1, **dadurch gekennzeichnet, dass** das Förderrad (42) eine Trägernabe (50) und eine elastische mittlere Schicht (52) aufweist, wobei die elastische mittlere Schicht (52) radial um die Trägernabe (50) positioniert ist.

3. Sämaschine nach einem der vorhergehenden Ansprüche, **dadurch gekennzeichnet, dass** ein Leitelement (60) vorgesehen ist, welches in das Förderrad (42) eingreifend positioniert ist, wobei das Leitelement (60) die mehreren getrennten Oberflächen auf dem Umfangsbereich intermittierend ablenkt.

4. Sämaschine nach Anspruch 3, **dadurch gekennzeichnet, dass** das Leitelement (60) eine Platte aufweist.

5. Sämaschine nach Anspruch 3 oder 4, **dadurch gekennzeichnet, dass** das Leitelement (60) an einer vorbestimmbaren Stelle relativ zum Umfangsbereich des Förderrads (42) positionierbar ist und die mehreren getrennten Oberflächen durch Rotation des Förderrades (42) intermittierend abgelenkt werden.

6. Sämaschine nach Anspruch einem der vorhergehenden Ansprüche, **dadurch gekennzeichnet, dass** das Ausbringsystem (30) ein mit der Saatgutführung (40) versehenes Gehäuse aufweist, wobei das Förderrad (42) wenigstens teilweise in dem Gehäuse untergebracht ist.

7. Sämaschine nach Anspruch 6, **dadurch gekennzeichnet, dass** die Saatgutführung (40) gegenüberliegende Seitenflächen und das Gehäuse ein Paar Seitenwände (46) aufweist, wobei die Seitenwände (46) an den gegenüberliegenden Seitenflächen der Saatgutführung (40) angeordnet sind.

8. Sämaschine nach einem der vorhergehenden Ansprüche, **dadurch gekennzeichnet, dass** die Sämaschine (10) mehrere Reihensäeinheiten (12) aufweist, wobei jede Reihensäeinheit (12) mit dem wenigstens einen Dosiersystem (28) und dem wenigstens einen Ausbringsystem (30) für Saatgut ausgebildet ist.

## Claims

1. Seed drill for dispensing seed, having at least one metering system (28) and at least one dispensing system (30) for seed, wherein each dispensing system (30) is connected to a corresponding metering system (28) and has a seed guide (40) and a conveying wheel (42) having a circumferential region provided with a plurality of adjoining separate surfaces, wherein the circumferential region is arranged in the close vicinity of at least one region of the seed guide (40) and the conveying wheel (42) is formed as a brush wheel and the separate surfaces are formed as a plurality of bristles extending substantially radially in the circumferential region, **characterized in that** the conveying wheel (42) is arranged downstream of the metering system (28) with respect to the flow of seed.

2. Seed drill according to Claim 1, **characterized in that** the conveying wheel (42) has a carrier hub (50) and an elastic central layer (52), wherein the elastic central layer (52) is positioned radially around the carrier hub (50).

3. Seed drill according to one of the preceding claims, **characterized by** the provision of a directing element (60) which is positioned so as to engage in the conveying wheel (42), wherein the directing element (60) intermittently deflects the plurality of separate surfaces in the circumferential region.

4. Seed drill according to Claim 3, **characterized in that** the directing element (60) has a plate.

5. Seed drill according to Claim 3 or 4, **characterized in that** the directing element (60) can be positioned at a predeterminable location relative to the circumferential region of the conveying wheel (42) and the plurality of separate surfaces are intermittently deflected by the rotation of the conveying wheel (42).

6. Seed drill according to one of the preceding claims, **characterized in that** the dispensing system (30) has a housing provided with the seed guide (40), wherein the conveying wheel (42) is accommodated at least partially in the housing.

7. Seed drill according to Claim 6, **characterized in that** the seed guide (4) has opposing side surfaces and the housing has a pair of side walls (46), wherein the side walls (46) are arranged on the opposing side surfaces of the seed guide (40).

8. Seed drill according to one of the preceding claims, **characterized in that** the seed drill (10) has a plurality of row sowing units (12), wherein each row sowing unit (12) is formed with the at least one metering system (28) and the at least one seed dispensing system (30).

## Revendications

1. Semoir pour distribuer des semences, comprenant au moins un système de dosage (28) et au moins un système de distribution (30) pour des semences, chaque système de distribution (30) étant en liaison avec un système de dosage (28) correspondant et présentant un guidage de semences (40) et une roue de transport (42) avec une région périphérique, qui est pourvue de plusieurs surfaces adjacentes séparées, la région périphérique étant disposée à proximité immédiate d'au moins une région du guidage de semences (40) et la roue de transport (42) étant réalisée sous forme de roue à brosse et les surfaces séparées étant réalisées sous forme d'une pluralité de poils s'étendant essentiellement radialement sur la région périphérique, **caractérisé en ce que** la roue de transport (42) est disposée en aval du système de dosage (28) par rapport au flux de semences.

2. Semoir selon la revendication 1, **caractérisé en ce que** la roue de transport (42) présente un moyeu de support (50) et une couche centrale élastique (52), la couche centrale élastique (52) étant positionnée radialement autour du moyeu de support (50).

3. Semoir selon l'une quelconque des revendications précédentes, **caractérisé en ce qu'**un élément conducteur (60) est prévu, lequel est positionné de manière à venir en prise dans la roue de transport (42), l'élément conducteur (60) déviant la pluralité des surfaces séparées de manière intermittente sur la région périphérique.

4. Semoir selon la revendication 3, **caractérisé en ce que** l'élément conducteur (60) présente une plaque.

5. Semoir selon la revendication 3 ou 4, **caractérisé en ce que** l'élément conducteur (60) peut être positionné en un point prédéfinissable par rapport à la région périphérique de la roue de transport (42) et la pluralité de surfaces séparées peut être déviée de manière intermittente par rotation de la roue de transport (42).

6. Semoir selon l'une quelconque des revendications précédentes, **caractérisé en ce que** le système de distribution (30) présente un boîtier pourvu du guidage de semences (40), la roue de transport (42) étant montée au moins en partie dans le boîtier.

7. Semoir selon la revendication 6, **caractérisé en ce que** le guidage de semences (40) présente des surfaces latérales opposées et le boîtier présente une paire de parois latérales (46), les parois latérales (46) étant disposées sur les surfaces latérales opposées du guidage de semences (40).

8. Semoir selon l'une quelconque des revendications précédentes, **caractérisé en ce que** le semoir (10) présente plusieurs unités semeuses en rangées (12), chaque unité semeuse en rangée (12) étant réalisée avec l'au moins un système de dosage (28) et l'au moins un système de distribution (30) pour semences.
